(19) Europäisches Patentamt
European Patent Office
Office européen des brevets

(11) **EP 2 091 009 A1**

(12) **EUROPÄISCHE PATENTANMELDUNG**

(43) Veröffentlichungstag:
**19.08.2009 Patentblatt 2009/34**

(51) Int Cl.:
***G06Q 10/00*** *(2006.01)*

(21) Anmeldenummer: **08002653.7**

(22) Anmeldetag: **13.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **EUROCOPTER DEUTSCHLAND GmbH 86607 Donauwörth (DE)**

(72) Erfinder:
• **Glück, Stefan**
**86679 Ellgau (DE)**
• **Martin Diaz, Luis**
**86609 Donauwörth (DE)**

• **Tornow, Constantin**
**86159 Augsburg (DE)**
• **Kustermann, Silke**
**86609 Donauwörth (DE)**

(74) Vertreter: **Pouillot, Laurent Pierre Paul**
**GPI & Associés**
**EuroParc de Pichaury - Bât D1**
**1330, rue Guillibert de la Lauzière**
**13856 Aix en Provence Cedex 3 (FR)**

Bemerkungen:
Geänderte Patentansprüche gemäss Regel 137(2) EPÜ.

(54) **Verfahren zur Analyse und Evaluierung einer gewerblichen Tätigkeit und Vorrichtung zur Umsetzung dieses Verfahrens**

(57) Die vorliegende Erfindung betrifft ein Verfahren zur technischen und ökonomischen Analyse einer gewerblichen Tätigkeit,

**dadurch gekennzeichnet, dass** es darin besteht:
- Daten zu erheben, die sich auf die gewerbliche Tätigkeit beziehen, und die Daten auf eine erste Untergruppe und eine zweite Untergruppe zu verteilen,
- die Daten aller Untergruppen zu verarbeiten, um einen ersten Wert (v1) eines gewerblichen Parameters, interne Fähigkeiten (IF) genannt, zu erhalten, der der ersten Daten-Untergruppe entspricht, und einen zweiten Wert (v2) eines anderen gewerblichen Parameters, strategische Bedeutung (SB) genannt, der der zweiten Daten-Untergruppe entspricht, wobei die besagten Werte (v1, v2) zwischen Null und jeweils vorbestimmten Grenzwerten $(IF_L)$ und $(SB_L)$ liegen,
- eine zweidimensionale Darstellung mit einer horizontalen Achse zu verwenden, die die möglichen Werte des gewerblichen Parameters umfasst, der der internen Fähigkeiten (IF) entspricht, und einer vertikalen Achse, die die möglichen Werte des gewerblichen Parameters umfasst, der der strategischen Bedeutung (SB) entspricht,
- mit Übergangswerten $(IF_I)$ und $(SB_J)$, die kleiner als die Grenzwerte $(IF_L)$ und $(SB_L)$ sind, und mit den besagten Grenzwerten $(IF_L)$ und $(SB_L)$ der besagten gewerblichen Parameter vier in der zweidimensionalen Darstellung etwa rechteckige Bereiche (I, II, III, IV) zu begrenzen, von denen jeder einer besonderen gewerblichen Evaluierung entspricht,
- den Bereich zu lokalisieren, in dem sich gewerbliche Tätigkeit befindet, die durch die Werte (v1, v2) definiert ist, die die Koordinaten eines Punkts in der zweidimensionalen Darstellung darstellen,
- einen derart der gewerblichen Tätigkeit zugeordneten Evoluierungsbericht auszugeben, der Informationen zur Erarbeitung eines Aktionsplans bereitstellt.

Fig.1

**Beschreibung**

Die vorliegende Erfindung bezieht sich auf das allgemeine technische Gebiet des Managements gewerblicher Tätigkeiten. Dieses Management, das vor allem gewerbliche, finanzielle und strategische Gesichtspunkte berücksichtigt, ist oft Ursache für Erfolge oder Misserfolge der Unternehmen. Ein derartiges Management kann sich weiterhin als sehr komplex erweisen, insbesondere wenn es sich um große Unternehmen oder multinationale Gruppen handelt. Die Daten technischer, kommerzieller, finanzieller, sozialer und anderer Art, die die gewerbliche Tätigkeit begleiten, sind von Natur aus hinsichtlich ihrer Bedeutung und Darstellung sehr unterschiedlich. Aus diesem Grund ist es besonders schwierig, sie zu kombinieren, zu verbinden oder zu summieren, um eine einfache und zuverlässige Übersicht über die gewerbliche Tätigkeit zu erhalten.

Die Aufgabe der vorliegenden Erfindung besteht darin, ein neues Verfahren zur technischen und ökonomischen Analyse einer gewerblichen Tätigkeit vorzuschlagen, das ermöglicht, die oben genannten Beschränkungen zu überwinden, das Schritte umsetzt, die darin bestehen, Daten und/oder Parameter, die sich auf die gewerbliche Tätigkeit beziehen, technisch zu verarbeiten.

Eine andere Aufgabe der vorliegenden Erfindung zielt darauf ab, eine neue Vorrichtung zur Umsetzung des vorgenannten Verfahrens vorzuschlagen.

Eine andere Aufgabe der vorliegenden Erfindung zielt darauf ab, ein neues Computerprogramm zur Umsetzung des vorgenannten Verfahrens vorzuschlagen.

Eine andere Aufgabe der vorliegenden Erfindung zielt darauf ab, eine neue, besonders einfache Art der Verarbeitung von Daten und Parameter vorzuschlagen, die sich auf eine gewerbliche Tätigkeit beziehen, deren Ergebnisse zur Erarbeitung einer gewerblichen Strategie direkt verwertbar sind.

In der folgenden Beschreibung wird das Wort "Kompetenz" benutzt, dass verstanden werden muss wie Kenntnisse zur guten Ausführung einer gewerblichen Tätigkeit oder Aktivität. Die gewerbliche Aktivität ist gekennzeichnet mit einem oder mehreren besonderen Kenntnissen. Das Wort "Kompetenz" kann auch unmittelbar die gewerbliche Tätigkeit bezeichnen. Eine Ersetzung von "gewerbliche Tätigkeit" mit "Kompetenz" kann also vorkommen.

Die Berufskernkompetenz oder Berufskernaktivität muss wie eine Basis Aktivität oder Kompetenz verstanden werden, die in der Gruppe vorhanden ist, die gut beherrecht ist und die eine hohe strategische Wichtigkeit besitzt, um sich im Markt zu platzieren.

Die der Erfindung zugewiesenen Aufgaben werden mit Hilfe eines Verfahrens zur technischen und ökonomischen Analyse einer gewerblichen Tätigkeit erreicht, das darin besteht:

- Daten zu erheben, die sich auf die gewerbliche Tätigkeit beziehen,

- die Daten auf eine erste Untergruppe und eine zweite Untergruppe zu verteilen,

- die Daten aller Untergruppen zu verarbeiten, um einen ersten Wert (v1) eines gewerblichen Parameters, interne Fähigkeiten (IF) genannt, zu erhalten, der der ersten Daten-Untergruppe entspricht, und einen zweiten Wert (v2) eines anderen gewerblichen Parameters, strategische Bedeutung (SB) genannt, der der zweiten Daten-Untergruppe entspricht, wobei die besagten Werte (v1, v2) zwischen einem Mindestwert und jeweils vorbestimmten Grenzwerten $(IF_I)$ und $(SB_I)$ liegen,

- eine zweidimensionale Darstellung mit einer horizontalen Achse zu verwenden, die die möglichen Werte des gewerblichen Parameters umfasst, der der internen Fähigkeiten (IF) entspricht, und mit einer vertikalen Achse, die die möglichen Werte des gewerblichen Parameters umfasst, der der strategischen Bedeutung (SB) entspricht,

- mit Übergangswerten $(IF_I)$ und $(SB_J)$, die kleiner als die Grenzwerte $(IF_L)$ und $(SB_L)$ sind, und mit den besagten Grenzwerten $(IF_L)$ und $(SB_L)$ der besagten gewerblichen Parameter vier in der zweidimensionalen Darstellung etwa rechteckige Bereiche (I, II, III, IV) zu begrenzen, von denen jeder einer besonderen gewerblichen Evaluierung entspricht,

- den Bereich zu lokalisieren, in dem sich die gewerbliche Tätigkeit befindet, die durch die Werte (v1, v2) definiert ist, die die Koordinaten eines Punkts in der zweidimensionalen Darstellung darstellen,

- einen derart der gewerblichen Tätigkeit zugeordneten Evaluierungsbericht auszugeben, der informationen zur Erarbeitung eines Aktionsplans bereitstellt.

Einem Umsetzungsbeispiel zufolge besteht das erfindungsgemäße Verfahren darin, die Daten, die sich auf die gewerbliche Tätigkeit beziehen, anhand eines Fragebogens zu erheben.

Einem Umsetzungsbeispiel zufolge besteht das erfindungsgemäße Verfahren darin, mindestens den Bereich (I, II, III oder IV) grafisch zu visualisieren, in dem der Koordinatenpunkt (v1, v2) lokalisiert ist.

Einem Umsetzungsbeispiel zufolge besteht das erfindungsgemäße Verfahren darin, Übergangswerte $(IF_I)$ und $(SB_J)$ auszuwählen, die jeweils gleich $(IF_L)/2$ und $(SB_L)/2$ sind.

Einem Umsetzungsbeispiell zufolge besteht das erfindungsgemäße Verfahren darin,

- ergänzende Daten zu erheben, die sich auf die gewerbliche Tätigkelt beziehen,

- die ergänzenden Daten auf eine dritte Untergruppe und eine vierte Untergruppe zu vertellen,

- die Daten der dritten und vierten Untergruppen zu verarbeiten, um einen' dritten Wert (v3) eines gewerblichen Parameters, Gewinnbeitrag (GB) genannt, zu erhalten, der der dritten Daten-Untergruppe entspricht, und einen vierten Wert (v4) eines anderen gewerblichen Parameters, Transferrisiko (RT) genannt, der der vierten Daten-Untergruppe entspricht, wobei die besagten Werte (v3, v4) zwischen einem Mindestwert und jeweils vorbestimmten Grenzwerten $(GB_L)$ und $(RT_L)$ liegen,

- eine ergänzende zweidimenslonale Darstellung mit einer horizontalen Achse, die die möglichen Werte des gewerblichen Parameters umfasst, der dem Gewinnbeitrag (GB) entspricht, und mit einer vertikalen Achse, die die möglichen Werte des gewerblichen Parameters umfasst, der dem Transferrisiko (RT) entspricht, zu verwenden,

- mit Übergangswerten $(GB_I)$ und $(RT_J)$, die kleiner als die Grenzwerte $(GB_L)$ und $(RT_L)$ sind, und mit den besagten Grenzwerten $(GB_L)$ und $(RT_L)$ der besagten gewerblichen Parameter vier in der zweidimensionalen Darstellung etwa rechteckige Bereiche (A, B, C, D) zu begrenzen, von denen jeder einer ergänzenden gewerblichen Evaluierung entspricht,

- den Bereich zu lokalisieren, in dem sich die gewerbliche Tätigkeit befindet, die durch die Werte (v3, v4) definiert ist, die die Koordinaten eines Punkts in der ergänzenden zweidimensionalen Darstellung darstellen,

- einen derart der gewerblichen Tätigkeit zugeordneten ergänzenden Evaluerungsbericht auszugeben, dessen Inhalt durch die Kombination des Bereichs, in dem der Koordinatenpunkt (v1, v2) lokalisiert ist, und des Bereichs, in dem der Koordinatenpunkt (v3, v4) lokalisiert ist, um Informationen bereitzustellen, die es erlauben, einen Aktionsplan zu erarbeiten.

Einem Umsetzungsbeispiel zufolge besteht das erfindungsgemäße Verfahren darin, die ergänzenden Daten, die sich auf die gewerbliche Tätigkeit beziehen, anhand von Fragebögen zu erheben.

Einem Umsetzungsbeispiel zufolge besteht das erfindungsgemäße Verfahren darin, mindestens den Bereich (A, B, C oder D) in Form einer ergänzenden grafischen Darstellung zu visualisieren, in der der Koordinatenpunkt (v3, v4) lokalisiert ist.

Einem Umsetzungsbeispiel zufolge besteht das erfindungsgemäße Verfahren darin, Übergangswerte $(GB_I)$ und $(RT_J)$ auszuwählen, die jeweils gleich $(GB_L)/2$ und $(RT_L)/2$ sind.

Einem Umsetzungsbeispiel zufolge besteht das erfindungsgemäße Verfahren darin, Daten in der Art Kostenanalyse, Zugang zu zusätzlichen Erträgen, Kundendienst, Möglichkeiten des Zugangs zu neuen Märkten, Möglichkeit zur Erhöhung der gewerblichen Effektivität zu verwenden, um den Wert (v3) des Gewinnbeitrags (GB) zu bestimmen, und Daten in der Art soziale Erwägungen des Standorts, Komplexität der Aufgaben, Dokumentation und Standardisierung, Auswirkung auf andere Verfahren, Anforderungen an Sicherheit und Vertraulichkeit, Existenz und Verfügbarkeit geeigneter Lieferanten, Planungsunsicherheiten, um den Wert (v4) des Transferrisikos (RT) zu bestimmen.

Einem Umsetzungsbeispiel zufolge besteht das erfindungsgamäae Verfahren darin, die Werte (v1, v2, v3, v4) zu bestimmen, indem für jeden Wert eine bestimmte Anzahl von Fragen verwendet wird, wobei jede Antwort aus einer endlichen Anzahl von Möglichkeiten ausgewählt ist, wobei eine bestimmte Anzahl von Punkten zugewiesen und durch einen Gewichtungskoeffizienten korrigiert wird, wobei die derart ermittelten gewichteten. Punkte addiert werden und wobei das Ergebnis dieser Addition durch die Summe aller Gewichtungskoeffizienten dividiert wird.

Die erfindungsgemäßen Ziele werden ebenfalls mit Hilfe eines Computerprogramms zur Steuerung des Betriebs eines Computers erreicht, das eine Gruppe von Befehlen zur Umsetzung des vorgenannten Verfahrens umfasst. Jeder erfindungsgemäße Verfahrensschritt wird damit von einem oder mehreren Befehlen ausgeführt, die im Programm definiert sind. Dieses Programm kann in vorteilhafter Weise beschaffen sein, um ergänzende Softwareprogramme in der Art von "Excel" zu steuern, die bereits auf dem Computer installiert sind.

Die der vorliegenden Erfindung zugeordneten Aufgaben werden ebenfalls mit einer Vorrichtung zur Umsetzung des vorgenannten Verfahrens erreicht. Diese Vorrichtung ist dahingehend bemerkenswert, da sie umfasst:

- Mittel zur Erhebung der Daten, die sich auf die gewerbliche Tätigkeit beziehen,

- Mittel zur Verteilung der Daten auf die Daten-Untergruppen,

- Mittel zur Verarbeitung, vor allem durch Berechnung, der Daten aller Untergruppen, um Werte (v1, v2, v3, v4) gewerblicher Parameter zu erhalten, die den Untergruppen entsprechen, wobei die besagten Werte (v1, v2, v3, v4) zwischen Mindeswerten und jeweils vorbestimmten Grenzwerten ($IF_L$, $SB_L$) und ($GB_L$, $RT_L$) liegen,

- Mittel zur Darstellung in zweidimensionaler Form mit einer horizontalen Achse, die die möglichen Werte der gewerblichen Parameter umfasst,

- Mittel, um mit Übergangswerten, die kleiner als die Grenzwerte sind und mit den besagten Grenzwerten der besagten gewerblichen Parameter vier in der zweidimensionalen Darstellung etwa rechteckige Bereiche (I, II, III, IV) oder (A, B, C, D) zu begrenzen, von denen jeder einer besonderen gewerblichen Evaluierung entspricht,

- Mittel zum Lokalisieren des Bereichs, in dem sich die gewerbliche Tätigkeit befindet, die durch die Werte (v1, v2) und (V3, v4) definiert ist, die die Koordinaten von Punkten in der zweidimensionalen Darstellung darstellen,

- und Mittel zum Ausgeben eines derart der gewerblichen Tätigkeit zugeordneten Evaluierungsberichts, dessen Inhalt von der Kombination lokalisierter Bereiche abhängt, so dass Informationen zur Erarbeitung eines Aktionsplans bereitgestellt werden.

Einem Umsetzungsbeispiel zufolge umfasst die erfindungsgemäße Vorrichtung Mittel zur Visualisierung in der Art eines Bildschirms, um die Position der Koordinatenpunkte (v1, v2) und (v3, v4) jeweils im Verhältnis zu den Bereichen (I, II, III, IV) und (A, B, C, D) grafisch darzustellen.

Einem Umsetzungsbeispiel zufolge umfasst die erfindungsgemäße Vorrichtung Mittel zum Ausdrucken in der Art eines Druckers, um einerseits den Evaluierungsbericht und andererseits eine grafische Darstellung der Koordinatenpunkte (v1, v2) und (v3, v4) in den entsprechenden Bereichen (I, II, III, IV) und (A, B, C, D) auszudrucken.

Die Erfindung und ihre Vorteile treten detaillierter im Rahmen der folgenden Beschreibung mit Ausführungs- und Umsetzumgabeisplelen zutage, die zum Zwecke der Veranschaulichung unter Bezugnahme auf die Figuren in der Anlage gegeben werden, von denen:

- die Figur 1 ein Beispiel für die technische Verarbeitung von Daten veranschaulicht, die sich auf eine gewerbliche Tätigkeit beziehen, und insbesondere das Ergebnis einer derartigen Verarbeitung, das mit einem Anzeigemittel dargestellt wird,

- die Figur 2 ein anderes Beispiel für die technische Verarbeitung von ergänzenden Daten oder Parametern einer gewerblichen Tätigkeit veranschaulicht, zum Beispiel der gewerblichen Tätigkeit, die Gegenstand von Figur 1 ist, und insbesondere das Ergebnis einer derartigen Verarbeitung, das mit einem Anzeigemittel dargestellt wird,

- Die Figuren 3 und 4 veranschaulichen konkrete Beispiele für die Umsetzung des erfindungsgemäßen Verfahrens.

Natürlich unterliegt die vorliegende Erfindung hinsichtlich ihrer Umsetzung zahlreichen Variationen. Obwohl mehrere Ausführungsarten beschrieben werden, ist verständlich, dass nicht alle möglichen Arten erschöpfend beschrieben werden können. Es Ist selbstverständlich denkbar, ein beschriebenes Mittel oder einen beschriebenen Schritt oder einen beschriebenen Befehl durch ein äquivalentes Mittel zu ersetzen, ohne den Rahmen der vorliegenden Erfindung zu sprengen.

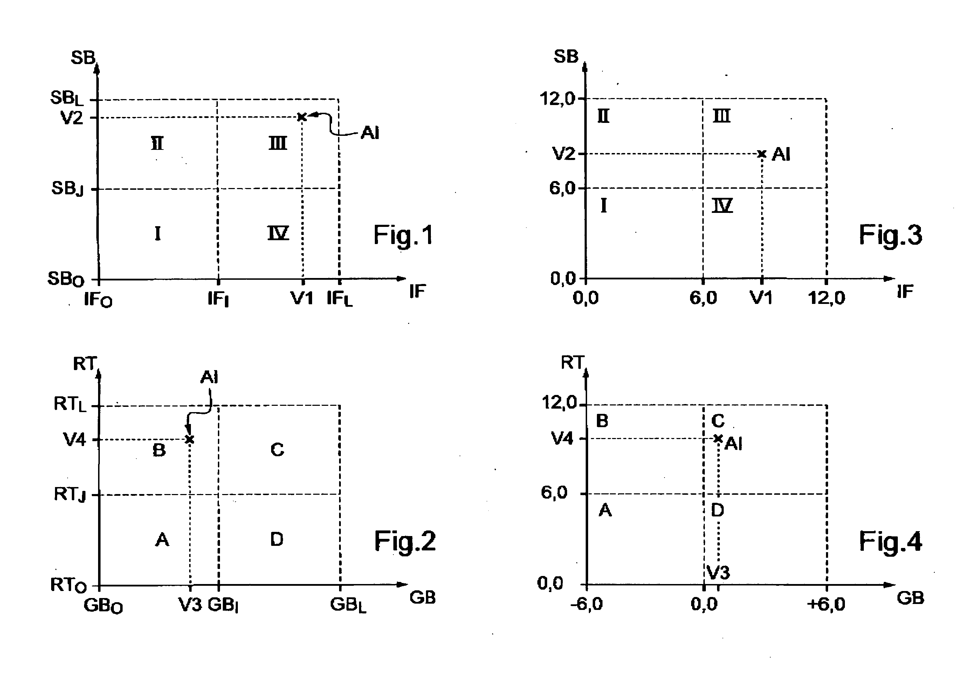

Das erfindungsgemäße Verfahren setzt Schritte um, die nachfolgend erläutert werden und sich für eine allgemeine Darstellung auf die Figuren 1 und 2 und für ein konkretes Beispiel auf die Figuren 3 und 4 beziehen.

Das Verfahren besteht darin, zum Beispiel anhand von Fragebögen Daten zu erheben, die sich auf eine gewerbliche Tätigkeit Al beziehen. Diese Daten werden danach auf zwei unterschiedliche Untergruppen verteilt, die dazu dienen, gewerbliche Parameter zu definieren, die jeweils interne Fähigkeiten IF und strategische Bedeutung SB genannt werden. Jede Angabe wird mit Hilfe einer Auswahl einer Angabe von drei, vier oder fünf möglichen Antworten auf eine Frage ermittelt. Jeder möglichen Antwort ist eine bestimmte Anzahl von Punkten zugeordnet.

Die Daten aller Untergruppen werden dann verarbeitet, um einen Wert (v1, v2) eines gewerblichen Parameters zu erhalten. Die Verarbeitung besteht darin, innerhalb jeder Untergruppe die Anzahl der Punkte, die der ausgewählten Antwort zugeordnet ist, mit einem bestimmten Koeffizienten zu gewichten, die Ergebnisse zu addieren und das Ganze durch die Summe aller Gewichtungskoeffizienten zu dividieren. Auf diese Weise erhält man die Werte (v1, v2) der gewerblichen Parameter IF und SB, die jeweils zwischen einem Mindestwert und bestimmten Grenzwerten $IF_L$ und $SB_L$ liegen. Siehe auch Figur 1.

Das Verfahren besteht danach darin, eine zweidimensionale. Darstellung mit einer horizontalen Achse, die die möglichen Werte der internen Fähigkeiten (IF) umfasst, und mit einer vertikalen Achse, die die möglichen Werte der strategischen Bedeutung (IR) umfasst, zu verwenden.

Der folgende Schritt besteht darin, mit Übergangswerten $IF_I$ und $SB_J$, die kleiner als die entsprechenden Grenzwerte $IF_L$, $SB_L$ sind, und mit den besagten Grenzwerten vier in der zweidimensionalen Darstellung rechteckige Bereiche (I, II, III, IV) zu begrenzen. Jeder derart begrenzte Bereich entspricht einer besonderen gewerblichen Evaluierung, die zu besonderen Aktionen oder besonderen strategischen Orientierungen anregt.

Dem erfindungsgemäßen Verfahren zufolge lokalisiert man dann den Bereich, in dem sich die gewerbliche Tätigkeit AI befindet, die von den Koordinaten (v1, v2) definiert wird.

Der folgende Schritt besteht darin, einen Evaluierungsbericht auszugeben, der der gewerblichen Tätigkeit AI zuzuordnen ist. Dieser Evaluierungsbericht erlaubt, Informationen zur Erarbeitung eines Aktionsplans bereitzustellen.

Das Verfahren besteht zum Beispiel darin, in grafischer Form zumindest den Bereich zu visualieleren, in dem der Punkt AI der Koordinaten (v1, v2) lokalisiert ist. Man visualisiert vorzugsweise die vier Bereiche (I, II, III, IV) sowie den Punkt AI.

Zum Beispiel sind die Übergangswerte $IF_I$ und $SB_J$ jeweils gleich $IF_L/2$ und $SB_L/2$.

Einem Umsetzungsbeispiel des erfindungsgemäßen Verfahrens zufolge werden die ergänzenden Daten, die sich auf die gewerbliche Tätigkeit AI beziehen, erhoben, und man wiederholt vollständig die Abfolge der oben beschriebenen Schritte.

Das Verfahren generiert demzufolge eine zweite zweidimensionale Darstellung wie anhand der Figur 2 veranschaulicht. Bei dieser umfasst die horizontale Achse die möglichen Werte eines gewerblichen Parameters, der Gewinnbeitrag GB genannt wird, und die vertikale Achse umfasst die möglichen Werte eines gewerblichen Parameters, der Transferrisiko (RT) genannt wird. In dieser neuen Darstellung ist die gewerbliche Tätigkeit AI durch einen Koordinatenpunkt (v3, v4) definiert, der Werten gewerblicher Parameter entspricht, die auf dieselbe Art und Weise bestimmt wurden wie die Werte (v1, v2).

Der folgende Schritt besteht darin, mit Übergangswerten $IF_I$ und $SB_J$, die kleiner als entsprechenden die Grenzwerte $IF_L$, $SB_L$ sind, und mit den besagten Grenzwerten vier in der zweidimensionalen Darstellung rechteckige Bereiche (I, II, III, IV) zu begrenzen. Jeder derart begrenzte Bereich entspricht einer besonderen gewerblichen Evaluierung, die zu besonderen Aktionen oder besonderen strategischen Orientierungen anregt.

Diesem Umsetzungsbeispiel zufolge besteht das Verfahren darin, einen der gewerblichen Tätigkeit AI zugeordneten ergänzenden Evaluierungsbericht auszugeben, dessen Inhalt durch die Kombination des Bereichs, in dem der Koordinatenpunkt (v1, v2) lokalisiert ist, und des Bereichs, in dem der Koordinatenpunkt (v3, v4) lokalisiert ist, bestimmt ist. Dieser ergänzende Evaluierungsbericht erlaubt damit, repräsentative Informationen über die betrachtete Industrielle Tätigkeit bereitzustellen, um einen Aktionsplan zu erarbeiten oder um neue industrielle, finanzielle, soziale oder kommerzielle Prioritäten zu definieren.

Die ergänzenden Daten werden zum Beispiel anhand von Fragebögen erhoben, und die Verarbeitung dieser Daten erfolgt identisch zu der Art und Weise, die hier oben beschrieben ist und zu den Werten (v1, v2) führt.

Ein Verfahrensschritt besteht darin, ebenfalls in Form einer ergänzenden Grafik zumindest den Bereich zu visualisieren, in dem der Koordinatenpunkt (v3, v4) lokalisiert ist.

Einem Umsetzungsbeispiel des erfindungsgemäßen Verfahrens zufolge sind die Übergangswerte $GB_I$ und $RT_J$ jeweils gleich $GB_L/2$ und $RT_L/2$.

Die Bereiche I, II, III, IV sind zum Beispiel folgendermaßen definiert:

- Bereich I: $IF_0 \leq IF < IF_I$ und $SB_0 \leq SB < SB_J$

- Bereich II: $IF_0 \leq IF < IF_I$ und $SB_J \leq SB \leq SB_L$

- Bereich III: $IF_I \leq IF \leq IF_L$ und $SB_J \leq SB \leq SB_L$

- Bereich IV: $IF_I \leq IF \leq IF_L$ und $SB_0 \leq SB < SB_J$

Die Bereiche A, B, C, D sind zum Beispiel folgendermaßen definiert:

- Bereich A: $GB_0 \leq GB < GB_I$ und $RT_0 \leq RT < RT_J$

- Bereich B: $GB_0 \leq GB < GB_I$ und $RT_J \leq RT \leq RT_L$

- Bereich C: $GB_I \leq GB \leq GB_L$ und $RT_J \leq RT \leq RT_L$

- Bereich D: $GB_I \leq GB \leq GB_L$ und $RT_0 \leq RT < RT_J$

Die Darstellung der Figur 1 ist Ergebnis einer Analyse wesentlicher Kompetenzen, und die Darstellung der Figur 2 ist Ergebnis einer finanziellen Analyse und des Transferrisikos. Eine gewerbliche Tätigkeit AI, die In den nachfolgend genannten Bereichen lokalisiert ist, weist demzufolge eines der folgenden Merkmale auf:

- Bereich I: es ist eine gewerbliche Tätigkeit außerhalb des Kernberufs, Die gewerbliche Tätigkeit weist eine geringe strategische Bedeutung auf und ist mit internen Fähigkeiten, die qualitativ niedriger oder gleichwertig gegenüber der Außenwelt sind, versehen. Das Transferrisiko sowie so wie der Gewinnbeitrag für diese gewerbliche Tätigkeit müssen analysiert werden um sein Ausscheidungspotential ab zu schätzen;

- Bereich II: Die gewerbliche Tätigkeit ist zu fördern. Die gewerbliche Tätigkeit besitzt ein starkes strategisches Potential, besitzt aber interne Fähigkeiten die qualitativ niedriger oder gleichwertig gegenüber der Außenwelt sind. Es ist wahrscheinlich dass diese gewerbliche Tätigkeit gefördert wird über eine Entwicklung von bestimmter internen Fähigkeiten;

- Bereich III: Es ist eine Berufskernaktivität. Die gewerbliche Tätigkeit weist ein starkes strategisches potential auf und besitzt qualitativ höhere interne Fähigkeiten als die Außenwelt. Es ist wahrscheinlich dass die gewerbliche Tätigkeit zum internen Know-how Kapital gehört und dass sie einen nennenswerten Wettbewerbsvorteil darstellt.

- Bereich IV: es ist eine gewerbliche Übergangsaktivität, Die gewerbliche Tätigkeit ist strategisch gesehen nicht interessant, besitzt aber sehr entwickelte interne Fähigkeiten. Das Transferrisiko und der Gewinnbeltrag für diese gewerbliche Tätigkeit müssen analysiert werden um das Interesse einer internen Beibehaltung ein zu schätzen. Es ist wahrscheinlich dass diese gewerbliche Tätigkeit nicht mit zukünftig Investitionen oder Entwicklungsbemühungen betroffen ist;

- Bereich A: Die gewerbliche Tätigkeit weist ein geringes Transferrisiko auf und leistet einen kleineren Beitrag zum Gewinn als der Beitrag der sie zusteuern könnte;

- Bereich B: Die gewerbliche Tätigkeit weist ein starkes Transferrisiko auf und leistet einen kleineren Beitrag zum Gewinn als der Beitrag der sie zusteuern könnte. Dieser Typ von gewerblichen Tätigkeiten ist unerwünscht und muss systematisch mit einer Minderung des Transferrisiko und/oder einer Verbesserung des Gewinnbeitrags verbunden sein.

- Bereich C: Die gewerbliche Tätigkeit weist ein starkes Transferrisiko auf und hilft voll mit zum Gewinn;

- Bereich D: Die gewerbliche Tätigkeit weist ein geringes Transferrisiko auf und hilft voll mit zum Gewinn.

Jeder industriellen Tätigkeit AI weist das Verfahren ein Bereichspaar zu, das im folgenden Kategorie genannt wird. Zu jeder Kategorie gehören Standardempfehlungen, die derartig lauten:

- für die Kategorie I-A; Die gewerblichen Tätigkeiten die kein strategisches Potential aufweisen und die nicht genügend zum Gewinn beitragen sind Kandidaten für eine Ausscheidung. Die Gruppe hat nicht genügend spezifische Mittel, die es ihr erlauben diese Tätigkeiten zu verwirklichen und das Transferrisiko ist gering. Die Gruppe muss die Entwicklung von Personalien in Richtung gewerblichen Berufskernaktivitäten in Betracht ziehen und Investitionen drosseln;

- für die Kategorie I-B: Diese Aktivitäten haben keine strategische Bedeutung und die Gruppe hat nicht die zutreffenden Fähigkeiten um diese Aktivitäten auszuführen und sie leisten keinen Beitrag zum Gewinn. Das Transferrisiko ist hoch und die Gruppe sollte entgegensehen entweder das Transferrisiko zu verkleinern (Dokumentation verbessern, Zulleferer entwickeln usw.) oder in Produktion und Infrastruktur zu investieren um die Wirksamkeit zu vergrößern und die Kosten zu verkleinern (wirksamere Produktionstechnologien einführen). Im ersten Fall, kommt die Aktivität In Kategorie I-A und im zweiten Fall umwandelt sich die Aktivität in eine Aktivität aus Kategorie I-C;

- für die Kategorie I-C; Diese Aktivitäten gehören nicht zum Berufskern, weisen ein hohes Transferrisiko auf und haben einen hohen Währungsmehrwert. Es gibt keine ökonomischen Gründen um sich von diesen Aktivitäten zu trennen. Es ist wahrscheinlich die internen Kapazitäten zu verbessern für die Ausführung dieser Aktivitäten (diese Aktivitäten oder Kompetenzen zur Kategorie IV-C zu versetzen) und ihrer Währungswert beizubehalten oder zu verbessern;

-   für die Kategorie I-D: Diese Aktivitäten gehören nicht zum Berufskern, weisen ein kleines Transferrisiko auf trotz einem erheblichen Währungsmehrwert. Wie für die vorhergehende Kategorie, ist es möglich die internen Fähigkeiten zu entwickeln um die entsprechenden Währungseffekten zu sichern. Wenn diese Aktivitäten von der Gruppe getrennt würden, gäbe es für die Gruppe nur ein finanziellen Einschlag aber kein dauerhafter Know-how Verlust;

-   für die Kategorie II-A: Kompetenzen in dem Bereich II-A zu fördern wäre für die Gruppe kostspielig und sie bieten Alternativen zu einer rein internen Herstellung. Es gibt zwei Handlungsalternativen. Zum Einen, Innovationsprozesse zu starten mit Kostenzielen und Investitionen in effizientere Ressourcen einzugehen, um zur der Kategorie III-D zu gelangen. Zum Anderen, externe Partnerschaften einzugehen. Weil es sich um hoch strategische Kompetenzen handelt, bedingt die letzte Hypothese einen strategischen Partner der die Risiken teilt, um eine Wirksamkeit auf dem Gebiet der der Kosten zu erzielen und ein Teil der Beherrschung der Kompetenzen innerhalb der Gruppe zu bewahren;

-   für die Kategorie II-B; Die Kompetenzen in dieser Kategorie zu fördern stellt ein strategisches potential dar, das nicht den Beitrag zum Gewinn bringen würde den es bringen könnte. Weil diese Aktivität ein hohen Transferrisiko aufweist, muss man sich auf Innovationen die auf Wirksamkeit und Kostenreduzierung beruhen zurückgreifen, in Zukunft zur Kategorie III-C zu gelangen;

-   für die Kategorie II-C; Es sind Kompetenzen die der Gruppe in Zukunft einen messbaren Wettbewerbsvorteil geben werden und die einen erheblichen Beitrag zum Gewinn erlauben werden. Das Ziel der entsprechenden Handlungen ist zu investieren und eine technologische Führerschaft zu generieren;

-   für die Kategorie II-D: Es sind zu befördernde und nicht gesicherte Kompetenzen da sie strategisch wichtig sind. Die Wettbewerber verfügen aber über gleichwertige Fähigkeiten. Die Gruppe hat ein messbares strategisches und finanzielles Interesse diese Aktivitäten intern zu fördern. Es kann überlegt werden, ob man ins direkte Wettbewerb eingeht oder ob man eine Kooperation mit einem etablierten Marktteilnehmer einhergeht;

-   für die Kategorie III-A: Die Kompetenzen des Berufskerns in dem Bereich A sind für die Gruppe Kostspielig und bieten die Möglichkeiten, diese Aktivitäten fremd zu beziehen. Es gibt zwei Handlungsmöglichkeiten. Die Effizienz zu steigern, um zur Kategorie III-D zu gelangen, oder Partner für eine Fremdbelieferung zu suchen. Weil es sich um Berufskernkompetenzen handelt, bedingt die letzte Hypothese einen strategischen Partner der die Risiken teilt, um eine Wirksamkeit auf dem Gebiet der Kosten zu erzielen und ein Teil der Beherrschung der Kernkompetenzen innerhalb der Gruppe zu bewahren;

-   für die Kategorie III-B: Die Berufskernkompetenzen in dieser Kategorie stellen einen strategischen Wert dar, der nicht den Beitrag zum Gewinn bringt den er bringen könnte. Weil diese Aktivität ein hohes Transferrisiko aufweist, sollte eine Verbesserung der Effektivität, derartig einer Automatisierung, um zur Kategorie III-C zu gelangen, entgegensehen.

-   für die Kategorie III-C: Es sind Kompetenzen die der Gruppe einen messbaren Wettbewerbsvorteil geben und stark zum Gewinn der Gruppe beitragen. Das Ziel hiermit ist den Vorsprung zu den Wettbewerbern mithilfe von Investitionen und Differenzierungsstrategien zu erhalten;

-   für die Kategorie III-D: Diese Berufskernkompetenzen müssen verteidigt werden weil sie strategisch gesehen wichtig sind. Die Wettbewerber besitzen aber vergleichbare Fähigkeiten. Die Gruppe hat ein strategisches und ein messbares finanzielles Interesse, diese Kompetenzen intern bei zu behalten. Es muss entgegengesehen werden, die Reichweite dieser Kompetenzen zu erweitern, indem man beispielsweise diese Aktivität an andere Kunden Außerhalb der Gruppe anbietet;

-   für die Kategorie IV-A: Diese Übergangskompetenzen liefern keinen Beitrag zum Gewinn der Gruppe und sind Kandidaten für Investitionskürzungen. Die Gruppe muss die entsprechenden Ressourcen entwickeln in Richtung Berufskernkompetenzen oder zu befördernden Kompetenzen so bald wie möglich und einer Übertragung an einen Lieferanten entgegensehen. Die Fähigkeiten der Gruppe können Teil eines Abkommens mit einem außen stehenden Lieferanten sein wenn sie genügend wettbewerbsfähig sind.

- für die Kategorie IV-B: Diese Übergangsaktivitäten erzielen keinen Beitrag zum Gewinn der Gruppe. Weil ein hohes Transferrisiko besteht, müsste die Gruppe einer Verminderung dieses Transferrisikos entgegensehen (mit einer besseren Dokumentation, Entwicklung der Zulieferer usw.) um zur Kategorie IV-A zu gelangen. Die Gruppe könnte auch in Effizienzsteigernden Maßnahmen investieren um wirksamer zu werden und um Kosten zu vermindern (derartig einer Einführung von modernen Produktionstechnologien). In diesem Fall umwandelt sich die Aktivität zur Kategorie IV-C.

- für die Kategorie IV-C: Diese Übergangsaktivitäten weisen ein hohes Transferrisiko und ein bedeutender Währungsmehrwert auf. Es gibt keine ökonomischen Gründen um sich von diesen Aktivitäten zu trennen. Es kann entgegen gesehen werden intern ein Subunternehmen zu gründen das die Berufskernkompetenzen integriert. Dies erlaubt andere Kunden zu erreichen im Gegensatz zu einer internen Beibehaltung.

- für die Kategorie IV-D: Diese Übergangsaktivitäten weisen ein geringes Transferrisiko und einen erheblichen Währungsmehrwert auf. Wie für die vorhergehende Kategorie, kann die Aktivität und die einhergehenden positiven finanziellen Auswirkungen erhalten oder diese externalisiert werden. Sollten diese Aktivitäten fremdvergeben werden (etwa aus Offset-Gründen) kommt es für die Gruppe "nur" zu einem finanziellen Einschlag aber nicht zu einem dauerhaften Verlust an Know-how.

Bezüglich der gewerblichen Tätigkeiten der anderen Kategorien kann es sich als vorteilhaft, ja sogar unabdingbar erweisen, Korrekturmaßnahmen vorzunehmen, um die Kategorie zu ändern,

Standard Empfehlungen, die die Kategorie berücksichtigen, in der eine gewerbliche Tätigkeit Al klassifiziert ist, sind in vorteilhafter Weise im ergänzenden Evaluierungsbericht enthalten.

Im Beispiel für die Umsetzung des erfindungsgemäßen Verfahrens, das durch die Figuren 3 und 4 veranschaulicht wird, wurden die folgenden Werte für gewerbliche Parameter aufgezeichnet, um die grafischen Darstellungen zu bezeichnen:

$SB_0 = 0,0$; $SB_J = 6,0$; $SB_L = 12,0$
$IF_0 = 0,0$; $IF_I = 6,0$; $IF_L = 12,0$
$RT_0 = 0,0$; $RT_J = 6,0$; $RT_L = 12,0$
$GB_0 = -6,0$; $GB_I = 0,0$; $IF_L = +6,0$

Zur Bestimmung des Wertes des Parameters der strategischen Bedeutung SB wurden die fünf folgenden Fragen verwendet:

-1/ Erfüllt die Tätigkeit Al die Erwartungen der Kunden?

| Mögliche Antworten | Punkte | Gewichtung |
|---|---|---|
| Nein | 0 | 0,2 |
| Sekundäre Erwartungen | 6 | 0,2 |
| Primäre Erwartungen | 12 | 0,2 |

-2/ Erlaubt die Tätigkeit, die Produkte von konkurrierenden Produkten zu unterscheiden?

| Mögliche Antworten | Punkte | Gewichtung |
|---|---|---|
| Nein | 0 | 0,2 |
| Teilweise | 6 | 0,2 |
| Ja | 12 | 0,2 |

-3/ Weist die Tätigkeit ein starkes Potential für zukünftige Innovationen auf?

| Mögliche Antworten | Punkte | Gewichtung |
|---|---|---|
| Nein | 0 | 0,2 |
| Teilweise | 6 | 0,2 |
| Ja | 12 | 0,2 |

-4/ Ist die Tätigkeit vielen Verfahren gemeinsam oder lediglich Bestandteil eines einzigen gewerblichen Verfahrens?

| Mögliche Antworten | Punkte | Gewichtung |
|---|---|---|
| Einem/s einzigen | 0 | 0,2 |
| Einigen/r | 6 | 0,2 |
| Viefen/r | 12 | 0,2 |

-5/ Ist die Tätigkeit eher isoliert oder in Interaktion mit anderen Tätigkeiten?

| Mögliche Antworten | Punkte | Gewichtung |
|---|---|---|
| Eher isoliert | 0 | 0,2 |
| Einige Interaktionen | 6 | 0,2 |
| Viele | 12 | 0,2 |

Zur Bestimmung des Wertes des Parameters der internen Fähigkeiten IF wurden die vier folgenden Fragen verwendet:

-1/ Beherrscht das Unternehmen das gewerbliche Verfahren?

| Mögliche Antworten | Punkte | Gewichtung |
|---|---|---|
| Nein | 0 | 0,25 |
| Teilweise | 6 | 0,25 |
| Ja | 12 | 0,25 |

-2/ Welche Fähigkeiten hat die Belegschaft im Vergleich zu anderen Unternehmen?

| Mögliche Antworten | Punkte | Gewichtung |
|---|---|---|
| Schlechtere | 0 | 0,25 |
| Ähnliche | 6 | 0,25 |
| Bessere | 12 | 0,25 |

-3/ Ist das Unternehmen technisch ausreichend ausgestattet, um diese Tätigkeit zu beherrschen?

| Mögliche Antworten | Punkte | Gewichtung |
|---|---|---|
| Weniger als andere | 0 | 0,25 |
| Ähnlich zu anderen | 6 | 0,25 |
| Besser | 12 | 0,25 |

-4/ Besitzt das Unternehmen andere Werte (Patente, Schulung; Finanzen) in Bezug zu dieser Tätigkeit?

| Mögliche Antworten | Punkte | Gewichtung |
|---|---|---|
| Nein | 0 | 0,25 |
| Wenig signifikante | 6 | 0,25 |
| Ja, signifikante | 12 | 0,25 |

Zur Bestimmung des Wertes des Parameters des Risikotransfers RT wurden die sieben folgenden Fragen verwendet:

-1/ Hätte der Transfer dieser Tätigkeit soziale Auswirkungen?

| Mögliche Antworten | Punkte | Gewichtung |
|---|---|---|
| Nein | 0 | 1/7 |
| Wenig signifikante | 6 | 1/7 |
| Starke Auswirkung | 12 | 1/7 |

-2/ Ist die Tätigkelt sehr komplex oder das Unternehmen derzeit nicht in der Lage, sie richtig zu beherrschen?

| Mögliche Antworten | Punkte | Gewichtung |
|---|---|---|
| Nein | 0 | 1/7 |
| Teilweise | 6 | 1/7 |
| Sehr komplex | 12 | 1/7 |

-3/ Wie ist das Standardisierungs- und Dokumentationsniveau dieser Tätigkeit?

| Mögliche Antworten | Punkte | Gewichtung |
|---|---|---|
| Sehr gut | 0 | 1/7 |
| Mittelmäßig | 6 | 1/7 |
| Schlecht | 12 | 1/7 |

-4/ Hätte der Transfer dieser Tätigkeit Auswirkungen auf die Abstimmung mit angrenzenden Tätigkeiten?

| Mögliche Antworten | Punkte | Gewichtung |
|---|---|---|
| Nein | 0 | 1/7 |
| Etwas | 6 | 1/7 |
| Ja | 12 | 1/7 |

-5/ Impliziert die Tätigkeit spezielle Sicherheitserwägungen?

| Mögliche Antworten | Punkte | Gewichtung |
|---|---|---|
| Nein | 0 | 1/7 |
| Ja, aber keine kritischen | 6 | 1/7 |
| Ja | 12 | 1/7 |

-6/ Gibt es geeignete Lieferanten auf dem Markt?

| Mögliche Antworten | Punkte | Gewichtung |
|---|---|---|
| Ja, viele | 0 | 1/7 |
| Ja, einige | 6 | 1/7 |
| Nein, noch keine | 12 | 1/7 |

-7/ Können benötigte Kapazitäten und erwartete Ergebnisse dieser Tätigkeit problemlos geplant werden?

| Mögliche Antworten | Punkte | Gewichtung |
|---|---|---|
| Ja | 0 | 1/7 |
| Teilweise | 6 | 1/7 |
| Nein | 12 | 1/7 |

Zur Bestimmung des Wertes des Parameters des Gewinnbeitrags GB wurden die fünf folgenden Fragen verwendet:
-1/ Werden zusätzliche Erträge realisiert, wenn die Tätigkeit intern umgesetzt wird?

| Mögliche Antworten | Punkte | Gewichtung |
|---|---|---|
| Signifikante Verlurte | -6 | 0,2 |
| Geringe Verluste | -3 | 0,2 |
| Keine Auswirkung | 0 | 0,2 |
| Ja, einige | +3 | 0,2 |
| Ja, viele | +6 | 0,2 |

-2/ Entsteht bei einer internen Umsetzung einen positiven Beitrag zum Kundendienstumsatz?

| Mögliche Antworten | Punkte | Gewichtung |
|---|---|---|
| Signifikante Verluste | -6 | 0,2 |
| Geringe Verluste | -3 | 0,2 |
| Keine Auswirkung | 0 | 0,2 |
| Ja, einige | +3 | 0,2 |
| Ja, viel | +6 | 0,2 |

-3/ Könnte die Tätigkeit bei einer Internen Umsetzung effizienter gestaltet werden?

| Mögliche Antworten | Punkte | Gewichtung |
|---|---|---|
| Nein, ist bereits effizient | +6 | 0,2 |
| Keine Änderung erwartet | 0 | 0,2 |
| Ja, sehr | -6 | 0,2 |

-4/ Hätte die Tätigkeit bei einer internen Umsetzung Potential zur Erschließung neuer Märkte?

| Mögliche Antworten | Punkte | Gewichtung |
|---|---|---|
| Signifikante Verluste | -6 | 0,2 |
| Schwache Verluste | -3 | 0,2 |
| Keine Auswirkung auf Märkte | 0 | 0,2 |
| Ja, etwas | +3 | 0,2 |
| Ja, viel | +6 | 0,2 |

-5/ Wurde eine positive finanzielle Bewertung durchgeführt?

| Mögliche Antworten | Punkte | Gewichtung |
|---|---|---|
| Stark negative | -6 | 0,2 |
| Eher negative | -3 | 0,2 |
| Noch keine | 0 | 0,2 |
| Eher positive | +3 | 0,2 |
| Sehr positive | +6 | 0,2 |

Es ist offensichtlich, dass die hier oben zur Verarbeitung der gewerblichen Daten angewendete Gewichtung von einer Frage zur anderen verbessert, moduliert oder angepasst werden kann, ohne den Rahmen der vorliegenden Erfindung zu verlassen. So könnte für jede Frage ein Gewichtungskoeffizient aus der folgenden Liste zur Auswahl gestellt werden:

0; 0,5/T; 1/T" 2/T; T, mit T gleich der Anzahl der Fragen, auf die für einen gegebenen gewerblichen Parameter zu antworten ist.

Im Umsetzungsbeispiel, das auf den Figuren 3 und 4 veranschaulicht ist, erhält man somit für die gewerbliche Tätigkeit AI die folgenden Werte:

$$GB = (6 \times 0,2 + 0 \times 0,2 + (-6) \times 0,2 + 3 \times 0,2 + 0 \times 0,2)/(5 \times 0,2)$$

$$= 0,6$$

$$RT =$$

$$(6 \times 1/7 + 12 \times 1/7 + 12 \times 1/7 + 12 \times 1/7 + 0 \times 1/7 + 6 \times 1/7 + 6 \times 1/7)/(7 \times 1/7)$$

$$= 7,7$$

$$SB = (12 \times 0,2 + 12 \times 0,2 + 6 \times 0,2 + 6 \times 0,2 + 6 \times 0,2)/(5 \times 0,2)$$

$$= 8,4$$

$$\text{Und } IF = (12 \times 0,25 + 6 \times 0,25 + 6 \times 0,25 + 12 \times 0,25)/(4 \times 0,25)$$

$$= 9,0$$

Zu jeder Antwort gibt es positive oder negative Punkte die mit einer Gewichtung multipliziert werden. Für jeden Parameter IF, RT, GB, SB werden dann die gewichteten Werten addiert und das Ergebnis mit der Summe der entsprechenden Gewichtungen dividiert.

Daraus ergibt sich, dass diese Tätigkeit in die Kategorie (III, C) fällt und dass sie eine wesentliche Tätigkeit darstellt, die beizubehalten ist.

**Patentansprüche**

1. Verfahren zur technischen und ökonomischen Analyse einer gewerblichen Tätigkeit,
   **dadurch gekennzeichnet, dass** es darin besteht:

   - die Daten zu erheben, die sich auf die gewerbliche Tätigkeit beziehen,
   - die Daten auf eine erste Untergruppe und eine zweite Untergruppe zu verteilen,
   - die Daten aller Untergruppen zu verarbeiten, um einen ersten Wert (v1) eines gewerblichen Parameters, Interne Fähigkeiten (IF) genannt, zu erhalten, der der ersten Daten-Untergruppe entspricht, und einen zweiten Wert (v2) eines anderen gewerblichen Parameters, strategische Bedeutung (SB) genannt, der der zweiten Daten-Untergruppe entspricht, wobei die besagten Werte (v1, v2) zwischen Mindestwerten ($IF_0$, $SB_0$) und jeweils vorbestimmten Grenzwerten ($IF_L$) und ($SB_L$) liegen,
   - eine zweidimensionale Darstellung mit einer horizontalen Achse zu verwenden, die die möglichen Werte des gewerblichen Parameters umfasst, der der internen Fähigkeiten (IF) entspricht, und mit einer vertikalen Achse, die die möglichen Werte des gewerblichen Parameters umfasst, der der strategischen Bedeutung (SB) entspricht,
   - mit Übergangswerten ($IF_J$) und ($SB_J$), die kleiner als die Grenzwerte ($IF_L$) und ($SB_L$) sind, und mit den besagten Grenzwerten ($IF_L$) und ($SB_L$) der besagten gewerblichen Parameter vier in der zweidimensionalen Darstellung etwa rechteckige Bereiche (I, II, III, IV) zu begrenzen, von denen jeder einer besonderen gewerblichen Evaluierung entspricht,
   - den Bereich zu lokalisieren, in dem sich gewerbliche Tätigkeit befindet, die durch die Werte (v1, v2) definiert ist, die die Koordinaten eines Punkts in der zweidimensionalen Darstellung darstellen,
   - einen derart der gewerblichen Tätigkeit zugeordneten Evaluierungsbericht auszugeben, der Informationen zur Erarbeitung eines Aktionsplans bereitstellt.

**2.** Verfahren zur technischen und ökonomischen Analyse einer gewerblichen Tätigkeit nach Anspruch 1, **dadurch gekennzeichnet, dass** es darin besteht, Daten, die sich auf die gewerbliche Tätigkeit beziehen, anhand von Fragebögen zu erheben.

**3.** Verfahren nach Anspruch 1 oder 2, **dadurch gekennzeichnet, dass** es darin besteht, mindestens den Bereich (I, II, III oder IV) grafisch zu visualisieren, in dem der Koordinatenpunkt (v1, v2) lokalisiert ist.

**4.** Verfahren nach einem der Ansprüche 1 bis 3, **dadurch gekennzeichnet, dass** es darin besteht, Übergangswerte $(IF_I)$ und $(SB_J)$ auszuwählen, die jeweils gleich $(IF_L)/2$ und $(SB_L)/2$ sind.

**5.** Verfahren nach einem der Ansprüche 1 bis 4, **dadurch gekennzeichnet, dass** es darin besteht

- ergänzende Daten zu erheben, die sich auf die gewerbliche Tätigkeit beziehen,
- die ergänzenden Daten auf eine dritte Untergruppe und eine vierte Untergruppe zu verteilen,
- die Daten der dritten und vierten Untergruppen zu verarbeiten, um einen dritten Wert (v3) eines gewerblichen Parameters, Gewinnbeitrag (GB) genannt, zu erhalten, der der dritten Daten-Untergruppe entspricht, und einen vierten Wert (v4) eines anderen gewerblichen Parameters, Transferrisiko (RT) genannt, der der vierten Daten-Untergruppe entspricht, wobei die besagten Werte (v3, v4) zwischen Mindestwerten $(GB_0, RT_0)$ und jeweils vorbestimmten Grenzwerten $(GB_L)$ und $(RT_L)$ liegen.
- eine ergänzende zweidimensionale Darstellung mit einer horizontalen Achse, die die möglichen Werte des gewerblichen Parameters umfasst, der dem Gewinnbeitrag (GB) entspricht, und mit einer vertikalen Achse, die die möglichen Werte des gewerblichen Parameters umfasst, der dem Transferrisiko (RT) entspricht, zu verwenden,
- mit Übergangswerten $(GB_I)$ und $(RT_J)$, die kleiner als die Grenzwerte $(GB_L)$ und $(RT_L)$ sind, und mit den besagten Grenzwerten $(GB_L)$ und $(RT_L)$ der besagten gewerblichen Parameter vier in der zweidimensionalen Darstellung etwa rechteckige Bereiche (A, B, C, D) zu begrenzen, von denen jeder einer ergänzenden gewerblichen Evaluierung entspricht,
- den Bereich zu lokalisieren, in dem sich die gewerbliche Tätigkeit befindet, die durch die Werte (v3, v4) definiert ist, die die Koordinaten eines Punkts in der ergänzenden zweidimensionalen Darstellung darstellen,
- einen derart der gewerblichen Tätigkeit zugeordneten ergänzenden Evaluierungsbericht auszugeben, dessen Inhalt durch die Kombination des Bereichs, in dem der Koordinatenpunkt (v1, v2) lokalisiert ist, und des Bereichs, in dem der Koordinatenpunkt (v3, v4) lokalisiert ist, um Informationen bereitzustellen, die es erlauben, einen Aktionsplan zu erarbeiten.

**6.** Verfahren zur technischen und ökonomischen Analyse einer gewerblichen Tätigkeit nach Anspruch 5, **dadurch gekennzeichnet, dass** es darin besteht, ergänzende Daten, die sich auf die gewerbliche Tätigkeit beziehen, anhand von Fragebögen zu erheben.

**7.** Verfahren nach Anspruch 5 oder 6, **dadurch gekennzeichnet, dass** es darin besteht, in Form einer ergänzenden Grafik zumindest den Bereich zu visualisieren, in dem der Koordinatenpunkt (v3, v4) lokalisiert ist.

**8.** Verfahren nach einem der Ansprüche 5 bis 7, **dadurch gekennzeichnet, dass** es darin besteht, Übergangswerte $(GS_I)$ und $(RT_J)$ auszuwählen, die jeweils gleich $(GB_L)/2$ und $(RT_L)/2$ sind.

**9.** Verfahren nach einem der Ansprüche 5 bis 8, **dadurch gekennzeichnet, dass** es darin besteht, Daten in der Art Kostenanalyse, zusätzliche Erträge, Kundendienst, Möglichkeiten des Zugangs zu neuen Märkten, Möglichkeit zur Erhöhung der gewerblichen Effektivität zu verwenden, um den Wert (v3) des Gewinnbeitrags (GB) zu bestimmen, und Daten in der Art soziale Erwägungen des Standorts, Komplexität der Aufgaben, Dokumentation und Standardisierung, Auswirkung auf andere Verfahren, Anforderungen an Sicherheit und Vertraulichkeit, Verfügbarkeit geeigneter Lieferanten, Unsicherheiten, um den Wert (v4) des Transferrisikos (RT) zu bestimmen.

**10.** Verfahren nach einem der Ansprüche 5 bis 9, **dadurch gekennzeichnet, dass** es darin besteht, die Werte (v1, v2, v3, v4) zu bestimmen, indem für jeden Wert eine bestimmte Anzahl von Fragen verwendet wird, wobei jede Antwort aus einer endlichen Anzahl von Möglichkeiten ausgewählt ist, wobei eine bestimmte Anzahl von Punkten zugewiesen und durch einen Gewichtungskoeffizienten korrigiert wird, wobei die derart ermittelten gewichteten Punkte addiert werden und wobei das Ergebnis dieser Addition durch die Summe aller Gewichtungskoeffizienten dividiert wird.

11. Computerprogramm zur Steuerung des Betriebs eines Computers, wobei das besagte Programm eine Gruppe von Befehlen umfasst, die das Verfahren nach einem der Ansprüche 1 bis 9 umsetzen.

12. Vorrichtung zur Umsetzung des Verfahrens nach einem der Ansprüche 1 bis 9,
**dadurch gekennzeichnet, dass** es umfasst:

- Mittel zur Erhebung der Daten, die sich auf die gewerbliche Tätigkeit beziehen,
- Mittel zur Verteilung der Daten auf die Daten-Untergruppen,
- Mittel zur Verarbeitung, vor allem durch Berechnung, der Daten aller Untergruppen, um Werte (v1, v2, v3, v4) gewerblicher Parameter zu erhalten, die den Untergruppen entsprechen, wobei die besagten Werte (v1, v2, v3, v4) zwischen Null und jeweils vorbestimmten Grenzwerten $(IF_L, SB_L)$ und $(GB_L, RT_L)$ liegen,
- Mittel zur Darstellung in zweidimensionaler Form mit einer horizontalen Achse, die die möglichen Werte der gewerblichen Parameter umfasst,
- Mittel, um mit Übergangswerten, die kleiner als die Grenzwerte sind und mit den besagten Grenzwerten der besagten gewerblichen Parameter vier in der zweidimensionalen Darstellung etwa rechteckige Bereiche (I, II, III, IV) oder (A, B, C, D) zu begrenzen, von denen jeder einer besonderen gewerblichen Evaluierung entspricht,
- Mittel zum Lokalisieren des Bereichs, in dem sich die gewerbliche Tätigkeit befindet, die durch die Werte (v1, v2) und (v3, v4) definiert ist, die die Koordinaten von Punkten in der zweidimensionalen Darstellung darstellen,
- und Mittel zum Ausgeben eines derart der gewerblichen Tätigkeit zugeordneten Evaluierungsberichts, dessen Inhalt von der Kombination lokalisierter Bereiche abhängt, so dass Informationen zur Erarbeitung eines Aktionsplans bereitgestellt werden.

13. Vorrichtung nach Anspruch 12,
**dadurch gekennzeichnet, dass** es Mittel zur Visualisierung in der Art eines Bildschirms umfasst, um die Position der Koordinatenpunkte (v1, v2) und (v3, v4) jeweils im Verhältnis zu den Bereichen (I, II, III, IV) und (A, B, C, D) grafisch darzustellen.

14. Vorrichtung nach Anspruch 12 oder 13,
**dadurch gekennzeichnet, dass** es Mittel zum Ausdrucken in der Art eines Druckers umfasst, um einerseits den Evaluierungsbericht und andererseits eine grafische Darstellung der Koordinatenpunkte (v1, v2) und (v3, v4) in den entsprechenden Bereichen (I, II, III, IV) und (A, B, C, D) auszudrucken.

**Geänderte Patentansprüche gemäss Regel 137(2) EPÜ.**

1. Computerprogramm zur Steuerung des Betriebs eines Computers, wobei das besagte Programm eine Gruppe von Befehlen umfasst, die das Verfahren zur technischen und ökonomischen Analyse einer gewerblichen Tätigkeit umsetzen,
dass es darin besteht:

- die Daten zu erheben, die sich auf die gewerbliche Tätigkeit beziehen,
- die Daten auf eine erste Untergruppe und eine zweite Untergruppe zu verteilen,
- die Daten aller Untergruppen zu verarbeiten, um einen ersten Wert (v1) eines gewerblichen Parameters, interne Fähigkeiten (IF) genannt, zu erhalten, der der ersten Daten-Untergruppe entspricht, und einen zweiten Wert (v2) eines anderen gewerblichen Parameters, strategische Bedeutung (SB) genannt, der der zweiten Daten-Untergruppe entspricht, wobei die besagten Werte (v1, v2) zwischen Mindestwerten $(IF_0, SB_0)$ und jeweils vorbestimmten Grenzwerten $(IF_L)$ und $(SB_L)$ liegen,
- eine zweidimensionale Darstellung mit einer horizontalen Achse zu verwenden, die die möglichen Werte des gewerblichen Parameters umfasst, der der internen Fähigkeiten (IF) entspricht, und mit einer vertikalen Achse, die die möglichen Werte des gewerblichen Parameters umfasst, der der strategischen Bedeutung (SB) entspricht,
- mit Übergangswerten $(IF_I)$ und $(SB_J)$, die kleiner als die Grenzwerte $(IF_L)$ und $(SB_L)$ sind, und mit den besagten Grenzwerten $(IF_L)$ und $(SB_L)$ der besagten gewerblichen Parameter vier in der zweidimensionalen Darstellung etwa rechteckige Bereiche (I, II, III, IV) zu begrenzen, von denen jeder einer besonderen gewerblichen Evaluierung entspricht,
- den Bereich zu lokalisieren, in dem sich gewerbliche Tätigkeit befindet, die durch die Werte (v1, v2) definiert ist, die die Koordinaten eines Punkts in der zweidimensionalen Darstellung darstellen,

einen derart der gewerblichen Tätigkeit zugeordneten Evaluierungsbericht auszugeben, der Informationen zur Erarbeitung eines Aktionsplans bereitstellt.

**2.** Computerprogramm nach Anspruch 1,
**dadurch gekennzeichnet, dass** das Verfahren darin besteht, Daten, die sich auf die gewerbliche Tätigkeit beziehen, anhand von Fragebögen zu erheben.

**3.** Computerprogramm nach Anspruch 1 oder 2
**dadurch gekennzeichnet, dass** das Verfahren darin besteht, mindestens den Bereich (I, II, III oder IV) grafisch zu visualisieren, in dem der Koordinatenpunkt (v1, v2) lokalisiert ist.

**4.** Computerprogramm nach einem der Ansprüche 1 bis 3,
**dadurch gekennzeichnet, dass** das Verfahren darin besteht, Übergangswerte $(IF_I)$ und $(SB_J)$ auszuwählen, die jeweils gleich $(IF_L)/2$ und $(SB_L)/2$ sind.

**5.** Computerprogramm nach einem der Ansprüche 1 bis 4,
**dadurch gekennzeichnet, dass** das Verfahren darin besteht,

- ergänzende Daten zu erheben, die sich auf die gewerbliche Tätigkeit beziehen,
- die ergänzenden Daten auf eine dritte Untergruppe und eine vierte Untergruppe zu verteilen,
- die Daten der dritten und vierten Untergruppen zu verarbeiten, um einen dritten Wert (v3) eines gewerblichen Parameters, Gewinnbeitrag (GB) genannt, zu erhalten, der der dritten Daten-Untergruppe entspricht, und einen vierten Wert (v4) eines anderen gewerblichen Parameters, Transferrisiko (RT) genannt, der der vierten Daten-Untergruppe entspricht, wobei die besagten Werte (v3, v4) zwischen Mindestwerten $(GB_0, RT_0)$ und jeweils vorbestimmten Grenzwerten $(GB_L)$ und $(RT_L)$ liegen,
- eine ergänzende zweidimensionale Darstellung mit einer horizontalen Achse, die die möglichen Werte des gewerblichen Parameters umfasst, der dem Gewinnbeitrag (GB) entspricht, und mit einer vertikalen Achse, die die möglichen Werte des gewerblichen Parameters umfasst, der dem Transferrisiko (RT) entspricht, zu verwenden,
- mit Übergangswerten $(GB_I)$ und $(RT_J)$, die kleiner als die Grenzwerte $(GB_L)$ und $(RT_L)$ sind, und mit den besagten Grenzwerten $(GB_L)$ und $(RT_L)$ der besagten gewerblichen Parameter vier in der zweidimensionalen Darstellung etwa rechteckige Bereiche (A, B, C, D) zu begrenzen, von denen jeder einer ergänzenden gewerblichen Evaluierung entspricht,
- den Bereich zu lokalisieren, in dem sich die gewerbliche Tätigkeit befindet, die durch die Werte (v3, v4) definiert ist, die die Koordinaten eines Punkts in der ergänzenden zweidimensionalen Darstellung darstellen,
- einen derart der gewerblichen Tätigkeit zugeordneten ergänzenden Evaluierungsbericht auszugeben, dessen Inhalt durch die Kombination des Bereichs, in dem der Koordinatenpunkt (v1, v2) lokalisiert ist, und des Bereichs, in dem der Koordinatenpunkt (v3, v4) lokalisiert ist, um Informationen bereitzustellen, die es erlauben, einen Aktionsplan zu erarbeiten.

**6.** Computerprogramm nach dem Anspruch 5,
**dadurch gekennzeichnet, dass** das Verfahren darin besteht, ergänzende Daten, die sich auf die gewerbliche Tätigkeit beziehen, anhand von Fragebögen zu erheben.

**7.** Computerprogramm nach Anspruch 5 oder 6,
**dadurch gekennzeichnet, dass** das Verfahren darin besteht, in Form einer ergänzenden Grafik zumindest den Bereich zu visualisieren, in dem der Koordinatenpunkt (v3, v4) lokalisiert ist.

**8.** Computerprogramm nach einem der Ansprüche 5 bis 7,
**dadurch gekennzeichnet, dass** das Verfahren darin besteht, Übergangswerte $(GB_I)$ und $(RT_J)$ auszuwählen, die jeweils gleich $(GB_L)/2$ und $(RT_L)/2$ sind.

**9.** Computerprogramm nach einem der Ansprüche 5 bis 8,

**dadurch gekennzeichnet, dass** das Verfahren darin besteht, Daten in der Art Kostenanalyse, zusätzliche Erträge, Kundendienst, Möglichkeiten des Zugangs zu neuen Märkten, Möglichkeit zur Erhöhung der gewerblichen Effektivität zu verwenden, um den Wert (v3) des Gewinnbeitrags (GB) zu bestimmen, und Daten in der Art soziale Erwägungen des Standorts, Komplexität der Aufgaben, Dokumentation und Standardisierung, Auswirkung auf andere Verfahren, Anforderungen an Sicherheit und Vertraulichkeit, Verfügbarkeit geeigneter Lieferanten, Unsicherheiten, um den Wert (v4) des Transferrisikos (RT) zu bestimmen.

**10.** Computerprogramm nach einem der Ansprüche 5 bis 9,
**dadurch gekennzeichnet, dass** das Verfahren darin besteht, die Werte (v1, v2, v3, v4) zu bestimmen, indem für jeden Wert eine bestimmte Anzahl von Fragen verwendet wird, wobei jede Antwort aus einer endlichen Anzahl von Möglichkeiten ausgewählt ist, wobei eine bestimmte Anzahl von Punkten zugewiesen und durch einen Gewichtungskoeffizienten korrigiert wird, wobei die derart ermittelten gewichteten Punkte addiert werden und wobei das Ergebnis dieser Addition durch die Summe aller Gewichtungskoeffizienten dividiert wird.

**11.** Vorrichtung deren Betrieb mit einem Computerprogramm nach einem der Ansprüche 1 bis 10 ausgeführt ist,
**dadurch gekennzeichnet, dass** es umfasst:

- Mittel zur Erhebung der Daten, die sich auf die gewerbliche Tätigkeit beziehen,
- Mittel zur Verteilung der Daten auf die Daten-Untergruppen,
- Mittel zur Verarbeitung, vor allem durch Berechnung, der Daten aller Untergruppen, um Werte (v1, v2, v3, v4) gewerblicher Parameter zu erhalten, die den Untergruppen entsprechen, wobei die besagten Werte (v1, v2, v3, v4) zwischen Null und jeweils vorbestimmten Grenzwerten ($IF_L$, $SB_L$) und ($GB_L$, $RT_L$) liegen,
- Mittel zur Darstellung in zweidimensionaler Form mit einer horizontalen Achse, die die möglichen Werte der gewerblichen Parameter umfasst,
- Mittel, um mit it Übergangswerten, die kleiner als die Grenzwerte sind und mit den besagten Grenzwerten der besagten gewerblichen Parameter vier in der zweidimensionalen Darstellung etwa rechteckige Bereiche (I, II, III, IV) oder (A, B, C, D) zu begrenzen, von denen jeder einer besonderen gewerblichen Evaluierung entspricht,
- Mittel zum Lokalisieren des Bereichs, in dem sich die gewerbliche Tätigkeit befindet, die durch die Werte (v1, v2) und (v3, v4) definiert ist, die die Koordinaten von Punkten in der zweidimensionalen Darstellung darstellen,
- und Mittel zum Ausgeben eines derart der gewerblichen Tätigkeit zugeordneten Evaluierungsberichts, dessen Inhalt von der Kombination lokalisierter Bereiche abhängt, so dass Informationen zur Erarbeitung eines Aktionsplans bereitgestellt werden.

**12.** Vorrichtung nach Anspruch 11,
**dadurch gekennzeichnet, dass** es Mittel zur Visualisierung in der Art eines Bildschirms umfasst, um die Position der Koordinatenpunkte (v1, v2) und (v3, v4) jeweils im Verhältnis zu den Bereichen (I, II, III, IV) und (A, B, C, D) grafisch darzustellen.

**13.** Vorrichtung nach Anspruch 11 oder 12,
**dadurch gekennzeichnet, dass** es Mittel zum Ausdrucken in der Art eines Druckers umfasst, um einerseits den Evaluierungsbericht und andererseits eine grafische Darstellung der Koordinatenpunkte (v1, v2) und (v3, v4) in den entsprechenden Bereichen (I, II, III, IV) und (A, B, C, D) auszudrucken.

Fig.1

Fig.2

Fig.3

Fig.4

EP 2 091 009 A1

**Europäisches Patentamt**

**EUROPÄISCHER TEILRECHERCHENBERICHT**

der nach Regel 63 des Europäischen Patentübereinkommens für das weitere Verfahren als
europäischer Recherchenbericht gilt

**Nummer der Anmeldung**

EP 08 00 2653

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| L | Die in der Anmeldung (Art 92 EPÜ) definierten technischen Aspekte werden als allgemein bekannt angesehen. Wegen ihrer Bekanntheit wird kein schriftlicher Nachweis für notwendig erachtet. Weitere Einzelheiten finden sich in der beiliegenden Stellungnahme und in der unterhalb angegebenen Referenz. XP002456252 * Zusammenfassung * ----- | 12-14 | INV. G06Q10/00 |

**RECHERCHIERTE SACHGEBIETE (IPC)**

G06Q

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 13. Juni 2008 | Streit, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04E09)

**Europäisches Patentamt**

**UNVOLLSTÄNDIGE RECHERCHE
ERGÄNZUNGSBLATT C**

Nummer der Anmeldung

EP 08 00 2653

Vollständig recherchierte Ansprüche:
    12-14

Nicht recherchierte Ansprüche:
    1-11

Grund für die Beschränkung der Recherche (nicht patentfähige Erfindung(en)):

Die Ansprüche 1-10 der Anmeldung beziehen sich auf einen Sachverhalt in Form von "Plan, Regeln und Verfahren für geschäftliche Tätigkeiten" bzw. "Wiedergabe von Informationen" als solche, der nach Art. 52(2)(c)(d) und (3) EPÜ von der Patentierbarkeit ausgeschlossen ist. Der Anspruch 11 der Anmeldung beziehen sich auf einen Sachverhalt in Form eines "Programms für Datenverarbeitungsanlagen" als solches, der nach Art. 52(2)(c) und (3) EPÜ von der Patentierbarkeit ausgeschlossen ist. Eine sinnvolle Recherche auf der Grundlage der Ansprüche 1-11 ist nicht möglich.